(19) Europäisches Patentamt
European Patent Office
Office européen des brevets

(11) **EP 4 589 870 A1**

(12) **EUROPEAN PATENT APPLICATION**
published in accordance with Art. 153(4) EPC

(43) Date of publication:
**23.07.2025 Bulletin 2025/30**

(21) Application number: **22959833.9**

(22) Date of filing: **27.09.2022**

(51) International Patent Classification (IPC):
**H04L 1/00** *(2006.01)* **H04W 72/12** *(2023.01)*

(52) Cooperative Patent Classification (CPC):
**H04L 1/00; H04W 72/12**

(86) International application number:
**PCT/CN2022/121756**

(87) International publication number:
**WO 2024/065183 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **JIANG, Dandan**
 **Xianning Road Xi'an, Shaanxi 710049 (CN)**
• **XU, Zongben**
 **Xianning Road Xi'an, Shaanxi 710049 (CN)**

• **LIU, Huan**
 **Xianning Road Xi'an, Shaanxi 710049 (CN)**
• **BI, Xiaoyan**
 **Shenzhen, Guangdong, Guangdong 518129 (CN)**
• **JIANG, Chenglong**
 **Shenzhen, Guangdong 518129 (CN)**
• **LIU, Yong**
 **Shenzhen, Guangdong 518129 (CN)**
• **LIU, Lei**
 **Guangzhou, Guangdong 518129 (CN)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **COMMUNICATION METHOD AND APPARATUS, AND STORAGE MEDIUM**

(57) Embodiments of this application provide a communication method and apparatus, and a storage medium. The method includes: sending a first reference signal; and receiving first information, where the first information indicates a first parameter and a second parameter, the first parameter and the second parameter are obtained based on the first reference signal, the first parameter indicates an association relationship between channel gains of a plurality of subchannels, the second parameter indicates a channel gain of a first subchannel in the subchannels, and the first parameter and the second parameter are used to determine one or more of the following: a modulation and coding scheme MCS for each of a plurality of codewords, and a first granularity of channel quality of the subchannels in time domain and/or frequency domain. In this manner, the modulation and coding scheme for each codeword can be determined only by sending the first parameter and the second parameter, improving spectral efficiency of a MIMO system.

FIG. 2

**Description**

**TECHNICAL FIELD**

This application relates to the field of communication technologies, and in particular, to a communication method and apparatus, and a storage medium.

**BACKGROUND**

Over the past decades, wireless communication systems have undergone evolution and research from first-generation analog communication to 5G new radio (New Radio, NR) and existing 6G technologies. In this complex evolution process, high throughput and massive connections have always been core challenges for a wireless communication network. In a plurality of 5G NR and 6G solutions, a massive multi-input multi-output (Multi-input Multi-output, MIMO) technology that can significantly improve system capacity is still used as a key technology to meet high-rate transmission requirements. In this technology, spatial resources are used to achieve an array gain, multiplexing and diversity gains, and an interference cancellation gain of a signal in space without increasing system bandwidth, thereby multiplying capacity and spectral efficiency of a communication system.

In a MIMO system, each transmit antenna (virtual antenna or physical antenna) has an independent channel. When there are a large quantity of antenna ports, space domain resources are abundant, and a large quantity of scheduling layers may be supported. However, meanwhile, a large amount of information needs to be indicated by channel quality feedback and scheduling control.

For example, when a quantity of scheduled streams increases by 1 to 2 orders of magnitude, if a codeword-to-layer mapping rule can continue to be used, a quantity of codewords that need to be processed during scheduling increases by 1 to 2 orders of magnitude. Consequently, during downlink scheduling control, a quantity of modulation and coding schemes (Modulation and Coding Schemes, MCSs) that need to be indicated by a network device to a terminal increases by 1 to 2 orders of magnitude, and a quantity of acknowledgements (Acknowledgements, ACKs)/negative acknowledgements (Negative Acknowledgements, NACKs) fed back by the terminal to the network device also increases by 1 to 2 orders of magnitude. This increases complexity of uplink and downlink scheduling and affects downlink throughput. In addition, for uplink scheduling control, more overheads of controlling MIMO parallel channels affect the downlink throughput. Consequently, in massive MIMO, as a quantity of scheduled streams increases, scheduling indication overheads are large, affecting spectral efficiency.

For another example, for a frequency division duplex (Frequency Division Duplexing, FDD) system, when a quantity of scheduled streams increases by 1 to 2 orders of magnitude, if a codeword-to-layer mapping rule can continue to be used, a quantity of channel quality indicators (Channel Quality Indicator, CQI) fed back by a terminal to a network device increases by 1 to 2 orders of magnitude. This increases uplink resource overheads and affects uplink and downlink throughput. Consequently, as a quantity of streams increases, channel feedback overheads increase, affecting spectral efficiency.

In conclusion, as a quantity of streams increases, both scheduling indication overheads and channel feedback overheads increase, affecting spectral efficiency.

**SUMMARY**

This application discloses a communication method and apparatus, and a storage medium, to reduce channel feedback overheads or channel scheduling indication overheads, so as to improve spectral efficiency of a system.

According to a first aspect, an embodiment of this application provides a communication method. The method may be performed by a communication device, or may be performed by an assembly (for example, a chip (system)) of a communication device. The method may include: A receiver sends a first reference signal. Then, the receiver receives first information. The first information indicates a first parameter and a second parameter. The first parameter and the second parameter are obtained based on the first reference signal. The first parameter indicates an association relationship between channel gains of a plurality of subchannels. The second parameter indicates a channel gain of a first subchannel in the subchannels. The first parameter and the second parameter are used to determine one or more of the following:

a modulation and coding scheme MCS for each of a plurality of codewords, and
a first granularity of channel quality of the subchannels in time domain and/or frequency domain.

In embodiments of this application, the receiver receives the first parameter and the second parameter from a transmitter. The first parameter indicates the association relationship between the channel gains of the subchannels. The second parameter indicates the channel gain of the first subchannel in the subchannels. The receiver may determine the modulation and coding scheme for each codeword based on the first parameter and the second parameter. In this manner, the receiver may determine the modulation and coding scheme for each codeword based on only the received first parameter and second parameter. In this way, channel feedback overheads can be reduced, and spectral efficiency of a system can be improved.

In a possible implementation, the first information further indicates an MCS mapping factor of each of the plurality of codewords. The MCS mapping factor of each codeword indicates an adjustment amount of mapping each codeword from a signal-to-noise ratio to a corresponding MCS.

Because radio propagation environments of all codewords are different, optimal MCSs are not completely the same. Therefore, a base station needs to calculate the MCS mapping factor of each codeword. In this way, after impact of the MCS mapping factor of each codeword is considered, each codeword may use an optimal MCS to transmit data.

In a possible implementation, the first parameter and the second parameter are used to determine the modulation and coding scheme MCS for each of the plurality of codewords. The method further includes: The receiver obtains a signal-to-noise ratio of each of the plurality of codewords based on the first parameter, the second parameter, and a mapping relationship between a subchannel and a codeword. Then, the receiver obtains the modulation and coding scheme MCS for each codeword based on the signal-to-noise ratio of each codeword.

After receiving the first parameter and the second parameter, the receiver may obtain the signal-to-noise ratio of each of the plurality of codewords, and then obtain the modulation and coding scheme MCS for each codeword through calculation.

In a possible implementation, the obtaining a signal-to-noise ratio of each of the plurality of codewords based on a first parameter, a second parameter, and a mapping relationship between a subchannel and a codeword may include: The receiver determines a first function based on the first parameter. The first function indicates relative values of the channel gains of the subchannels. In this way, the receiver obtains the signal-to-noise ratio of each of the plurality of codewords based on the first function, the second parameter, and the mapping relationship between subchannels and a codeword.

In this solution, channel quality of each subchannel is jointly represented based on the first parameter and the second parameter. The receiver may determine a first function based on the first parameter. Then, the signal-to-noise ratio of each codeword may be obtained based on the first function, the second parameter, and the mapping relationship between a subchannel and a codeword. Compared with the conventional technology in which the signal-to-noise ratio of each codeword needs to be determined based on a received channel quality indicator CQI of each codeword, channel feedback overheads can be greatly reduced in this solution.

In a possible implementation, the obtaining a modulation and coding scheme MCS for each codeword based on a signal-to-noise ratio of each codeword includes: obtaining the modulation and coding scheme MCS for each codeword based on the signal-to-noise ratio of each codeword and an MCS mapping factor of each codeword. The MCS mapping factor of each codeword indicates an adjustment amount of mapping each codeword from a signal-to-noise ratio to a corresponding MCS.

In this manner, after impact of the MCS mapping factor of each codeword is considered, an optimal MCS may be used for each codeword to transmit data.

In a possible implementation, the MCS mapping factor of each codeword is preset.

In another possible implementation, the MCS mapping factor of each codeword is preconfigured.

In a possible implementation, the first parameter is associated with at least one of a trace of a covariance matrix of a channel matrix, a rank of the channel matrix, and the second parameter. The channel matrix is obtained based on the first reference signal.

In a possible implementation, the first subchannel is a subchannel corresponding to a largest eigenvalue in the channel matrix. In other words, a value of the channel gain of the first subchannel is a value of a channel gain of a subchannel corresponding to a largest eigenvalue in the channel matrix.

In a possible implementation, the first parameter and the second parameter are used to determine the first granularity of the channel quality of the subchannels in time domain and/or frequency domain. The method further includes: obtaining the first granularity of the channel quality of the subchannels in time domain and/or frequency domain through calculation based on a variation of the first parameter and/or the second parameter in time domain and/or frequency domain and a preset threshold.

The transmitter and the receiver agree on a granularity of the channel quality of the subchannels in time domain and/or frequency domain, to ensure performance of a system.

In a possible implementation, the first information further indicates a second granularity of the channel quality of the subchannels in time domain and/or frequency domain.

In this manner, based on the first parameter, the second parameter, and the second granularity of the channel quality of the subchannels in time domain and/or frequency domain, the receiver can adaptively determine a time-frequency domain resource granularity. This improves spectral efficiency of a MIMO system.

Optionally, the second granularity is not greater than the first granularity.

The receiver may use the second granularity based on the indicated second granularity.

Alternatively, the receiver may determine the first granularity based on the first parameter and the second parameter. Then, the first granularity is used.

Alternatively, the receiver may determine the first granularity based on the first parameter and the second parameter. The receiver determines, based on the indicated second granularity and the determined first granularity, a granularity used by the receiver. For example, the receiver preferentially uses the second granularity.

According to a second aspect, an embodiment of this application provides a communication method. The method may be performed by a communication device, or may be performed by an assembly (for example, a chip (system)) of a communication device. The method may include: A transmitter receives a first reference signal from a receiver. The transmitter obtains a first parameter and a second parameter based on the first reference signal. The first parameter indicates an association relationship between channel gains of a plurality of subchannels. The second parameter indicates a channel gain of a first subchannel in the subchannels. Then, the transmitter sends first information to the receiver. The first information indicates the first parameter and the second parameter. The first parameter and the second parameter are used to determine one or more of the following:

a modulation and coding scheme MCS for each of a plurality of codewords, and
a first granularity of channel quality of the subchannels in time domain and/or frequency domain.

In this embodiment of this application, the transmitter obtains the first parameter and the second parameter based on the received first reference signal. Then, the transmitter sends the first parameter and the second parameter to the receiver, so that the receiver determines the MCS for each codeword based on the first parameter and the second parameter. In this manner, the transmitter does not need to send the channel quality indicator of each codeword, but sends only the first parameter and the second parameter, so that the receiver can determine the MCS for each codeword. In this way, channel scheduling indication overheads can be reduced, and spectral efficiency of a system can be improved.

In a possible implementation, the first information further indicates an MCS mapping factor of each of the plurality of codewords. The MCS mapping factor of each codeword indicates an adjustment amount of mapping each codeword from a signal-to-noise ratio to a corresponding MCS.

Because radio propagation environments of all codewords are different, optimal MCSs are not completely the same. Therefore, a base station needs to calculate the MCS mapping factor of each codeword. In this way, after impact of the MCS mapping factor of each codeword is considered, each codeword may use an optimal MCS to transmit data.

In a possible implementation, the first parameter and the second parameter are used to determine the modulation and coding scheme MCS for each of the plurality of codewords. The method further includes: obtaining a signal-to-noise ratio of each of the plurality of codewords based on the first parameter, the second parameter, and a mapping relationship between a subchannel and a codeword. Then, the modulation and coding scheme MCS for each codeword is obtained based on the signal-to-noise ratio of each codeword.

The first parameter and the second parameter are used to determine the modulation and coding scheme MCS for each of the plurality of codewords. The signal-to-noise ratio of each of the plurality of codewords is obtained based on the first parameter and the second parameter, and then the modulation and coding scheme MCS for each codeword is obtained through calculation.

In a possible implementation, the obtaining a signal-to-noise ratio of each of the plurality of codewords based on the first parameter, the second parameter, and a mapping relationship between a subchannel and a codeword includes: determining a first function based on the first parameter. The first function indicates relative values of the channel gains of the subchannels. The signal-to-noise ratio of each of the plurality of codewords is obtained based on the first function, the second parameter, and the mapping relationship between a subchannel and a codeword.

In this solution, channel quality of each subchannel is jointly represented based on the first parameter and the second parameter. The first function may be determined based on the first parameter. Then, the signal-to-noise ratio of each codeword may be obtained based on the first function, the second parameter, and the mapping relationship between a subchannel and a codeword. By using this solution, channel feedback overheads can be greatly reduced.

In a possible implementation, the method further includes: obtaining an MCS mapping factor of each codeword through calculation based on a signal-to-noise ratio of each codeword and the MCS for each codeword. The MCS mapping factor of each codeword indicates an adjustment amount of mapping each codeword from a signal-to-noise ratio to a corresponding MCS.

In this manner, after impact of the MCS mapping factor of each codeword is considered, an optimal MCS may be used for each codeword to transmit data.

In a possible implementation, the first parameter is associated with at least one of a trace of a covariance matrix of a channel matrix, a rank of the channel matrix, and the second parameter. The channel matrix is obtained based on the first reference signal.

In a possible implementation, the first subchannel is a subchannel corresponding to a largest eigenvalue in the channel matrix. In other words, a value of the channel gain of the first subchannel is a value of a channel gain of a subchannel corresponding to a largest eigenvalue in the channel matrix.

In a possible implementation, the first information further indicates a second granularity of the channel quality of the subchannels in time domain and/or frequency domain.

In a possible implementation, the method further includes: obtaining the first granularity of the channel quality of the subchannels in time domain and/or frequency domain through calculation based on a variation of the first parameter and/or the second parameter in time domain and/or frequency domain and a preset threshold. Then, the second granularity is determined based on the first granularity.

The transmitter and the receiver agree on a granularity of the channel quality of the subchannels in time domain and/or frequency domain, to ensure performance of a MIMO system. In this manner, the first granularity of the channel quality of the subchannels in time domain and/or frequency domain is determined based on the first parameter and the second parameter, and the first granularity of the time-frequency domain resource may be adaptively adjusted to determine the second granularity. This improves spectral efficiency of the MIMO system.

Optionally, the second granularity is not greater than the first granularity.

According to a third aspect, an embodiment of this application provides a communication apparatus, including:

a communication module, configured to send a first reference signal, where
the communication module is further configured to receive first information, where the first information indicates a first parameter and a second parameter, the first parameter and the second parameter are obtained based on the first reference signal, the first parameter indicates an association relationship between channel gains of a plurality of subchannels, the second parameter indicates a channel gain of a first subchannel in the subchannels, and the first parameter and the second parameter are used to determine one or more of the following:

a modulation and coding scheme MCS for each of a plurality of codewords, and
a first granularity of channel quality of the subchannels in time domain and/or frequency domain.

In a possible implementation, the first information further indicates an MCS mapping factor of each of the plurality of codewords, and the MCS mapping factor of each codeword indicates an adjustment amount of mapping each codeword from a signal-to-noise ratio to a corresponding MCS.

In a possible implementation, the first parameter and the second parameter are used to determine the modulation and coding scheme MCS for each of the plurality of codewords, and the apparatus further includes a processing module, configured to:

obtain a signal-to-noise ratio of each of the plurality of codewords based on the first parameter, the second parameter, and a mapping relationship between a subchannel and a codeword; and
obtain the modulation and coding scheme MCS for each codeword based on the signal-to-noise ratio of each codeword.

In a possible implementation, the processing module is further configured to:

determine a first function based on the first parameter, where the first function indicates relative values of the channel gains of the subchannels; and
obtain the signal-to-noise ratio of each of the plurality of codewords based on the first function, the second parameter, and the mapping relationship between a subchannel and a codeword.

In a possible implementation, the processing module is further configured to:
obtain the modulation and coding scheme MCS for each codeword based on the signal-to-noise ratio of each codeword and an MCS mapping factor of each codeword, where the MCS mapping factor of each codeword indicates an adjustment amount of mapping each codeword from a signal-to-noise ratio to a corresponding MCS.

In a possible implementation, the MCS mapping factor of each codeword is preset, or the MCS mapping factor of each codeword is preconfigured.

In a possible implementation, the first parameter is associated with at least one of a trace of a covariance matrix of a channel matrix, a rank of the channel matrix, and the second parameter, and the channel matrix is obtained based on the first reference signal.

In a possible implementation, the first subchannel is a subchannel corresponding to a largest eigenvalue in the channel matrix. In other words, a value of the channel gain of the first subchannel is a value of a channel gain of a subchannel corresponding to a largest eigenvalue in the channel matrix.

In a possible implementation, the first parameter and the second parameter are used to determine the first granularity of the channel quality of the subchannels in time domain and/or frequency domain, and the apparatus further includes the processing module, configured to:
obtain the first granularity of the channel quality of the subchannels in time domain and/or frequency domain through calculation based on a variation of the first parameter and/or the second parameter in time domain and/or frequency domain and a preset threshold.

In a possible implementation, the first information further indicates a second granularity of the channel quality of the subchannels in time domain and/or frequency domain.

In a possible implementation, the processing module is further configured to:

obtain the first granularity of the channel quality of the subchannels in time domain and/or frequency domain through calculation based on a variation of the first parameter and/or the second parameter in time domain and/or frequency domain and a preset threshold; and
determine the second granularity based on the first granularity.

According to a fourth aspect, an embodiment of this application provides a communication apparatus, including:

a communication module, configured to receive a first reference signal; and
a processing module, configured to a first parameter and a second parameter based on the first reference signal, where the first parameter indicates an association relationship between channel gains of a plurality of subchannels, and the second parameter indicates a channel gain of a first subchannel in the subchannels, where
the communication module is further configured to send first information, where the first information indicates the first parameter and the second parameter, and the first parameter and the second parameter are used to determine one or more of the following:

a modulation and coding scheme MCS for each of a plurality of codewords, and
a first granularity of channel quality of the subchannels in time domain and/or frequency domain.

In a possible implementation, the first information further indicates an MCS mapping factor of each of the plurality of codewords, and the MCS mapping factor of each codeword indicates an adjustment amount of mapping each codeword from a signal-to-noise ratio to a corresponding MCS.

In a possible implementation, the first parameter and the second parameter are used to determine the modulation and coding scheme MCS for each of the plurality of codewords, and the processing module is further configured to:

obtain a signal-to-noise ratio of each of the plurality of codewords based on the first parameter, the second parameter, and a mapping relationship between a subchannel and a codeword; and
obtain the modulation and coding scheme MCS for each codeword based on the signal-to-noise ratio of each codeword.

In a possible implementation, the processing module is further configured to:

determine a first function based on the first parameter, where the first function indicates relative values of the channel gains of the subchannels; and
obtain the signal-to-noise ratio of each of the plurality of codewords based on the first function, the second parameter, and the mapping relationship between a subchannel and a codeword.

In a possible implementation, the processing module is further configured to:
obtain an MCS mapping factor of each codeword through calculation based on the signal-to-noise ratio of each codeword and the MCS for each codeword, where the MCS mapping factor of each codeword indicates an adjustment amount of mapping each codeword from a signal-to-noise ratio to a corresponding MCS.

**In** a possible implementation, the first parameter is associated with at least one of a trace of a covariance matrix of a channel matrix, a rank of the channel matrix, and the second parameter, and the channel matrix is obtained based on the first reference signal.

In a possible implementation, the first subchannel is a subchannel corresponding to a largest eigenvalue in the channel matrix. In other words, a value of the channel gain of the first subchannel is a value of a channel gain of a subchannel corresponding to a largest eigenvalue in the channel matrix.

In a possible implementation, the first information further indicates a second granularity of the channel quality of the subchannels in time domain and/or frequency domain.

In a possible implementation, the processing module is further configured to:

obtain the first granularity of the channel quality of the subchannels in time domain and/or frequency domain through calculation based on a variation of the first parameter and/or the second parameter in time domain and/or frequency domain and a preset threshold; and

determine the second granularity based on the first granularity.

For the third aspect or the fourth aspect, in a possible implementation, the processing module may be a processor, and the communication module may be a transceiver module, a transceiver, or a communication interface. It may be understood that the communication module may be a transceiver in the apparatus, for example, implemented by using an antenna, a feeder, a codec, or the like in the apparatus. Alternatively, if the communication apparatus is a chip disposed in a device, the communication module may be an input/output interface of the chip, for example, an input/output circuit or a pin.

According to a fifth aspect, an embodiment of this application provides a communication apparatus. The communication apparatus includes one or more processors. The one or more processors are configured to execute a computer program stored in one or more memories, so that the communication apparatus implements the method according to any one of the implementations in the first aspect or the method according to any one of the implementations in the second aspect.

**In** a possible implementation, the communication apparatus further includes the one or more memories.

**In** a possible implementation, the communication apparatus is a chip or a chip system.

According to a sixth aspect, an embodiment of this application provides a computer-readable storage medium. The computer-readable storage medium stores instructions. When the instructions are executed by a processor, the method according to any one of the implementations in the first aspect or the method according to any one of the implementations in the second aspect is implemented.

According to a seventh aspect, an embodiment of this application provides a computer program product, including a computer program. When the computer program is executed, the method according to any one of the implementations in the first aspect or the method according to any one of the implementations in the second aspect is implemented.

According to an eighth aspect, an embodiment of this application provides a communication system, including the apparatus according to any one of the implementations in the third aspect and the apparatus according to any one of the implementations in the fourth aspect.

It may be understood that the apparatus according to the third aspect, the apparatus according to the fourth aspect, the apparatus according to the fifth aspect, the computer storage medium according to the sixth aspect, the computer program product according to the seventh aspect, or the communication system according to the eighth aspect is configured to perform the method according to any one of the implementations in the first aspect and the method according to any one of the implementations in the second aspect. Therefore, for beneficial effect that can be achieved, refer to beneficial effect in the corresponding method. Details are not described herein again.

## BRIEF DESCRIPTION OF DRAWINGS

The following describes accompanying drawings used in embodiments of this application.

FIG. 1 is a diagram of an application scenario of a communication system according to an embodiment of this application;

FIG. 2 is a schematic flowchart of a communication method according to an embodiment of this application;

FIG. 3 is a diagram of a relative relationship between MIMO subchannels according to an embodiment of this application;

FIG. 4 is a schematic flowchart of another communication method according to an embodiment of this application;

FIG. 5 is a schematic flowchart of still another communication method according to an embodiment of this application;

FIG. 6 is a diagram of a structure of a communication apparatus according to an embodiment of this application;

FIG. 7 is a diagram of a structure of another communication apparatus according to an embodiment of this application; and

FIG. 8 is a diagram of a hardware structure of a communication apparatus according to an embodiment of this application.

## DESCRIPTION OF EMBODIMENTS

The following describes embodiments of this application with reference to accompanying drawings in embodiments of this application. Terms used in implementations of embodiments of this application are merely used to explain specific embodiments of this application, and are not intended to limit this application.

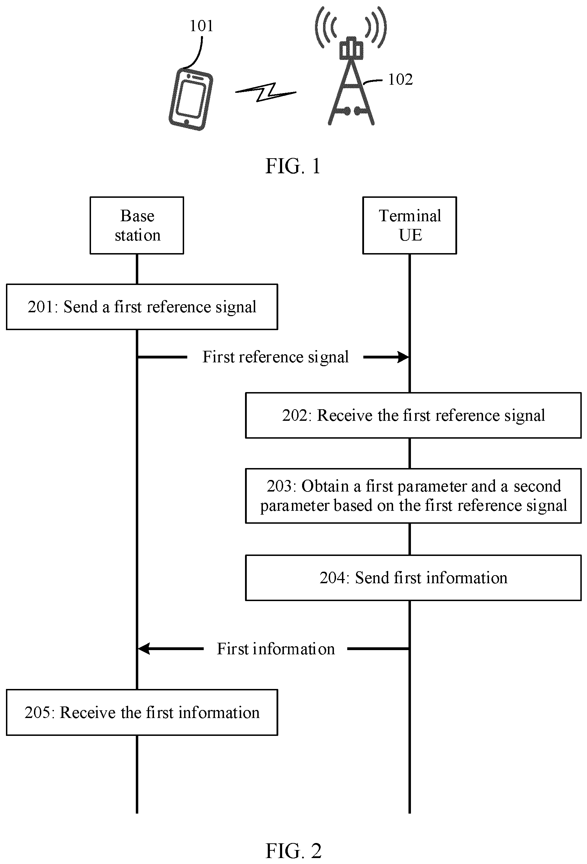

The following describes in detail a system architecture in embodiments of this application with reference to the accompanying drawings. FIG. 1 is a diagram of an application scenario of a communication system according to an embodiment of this application. The communication system may include a terminal 101 and a network device 102.

The terminal 101 may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form that are used by the terminal are not limited in embodiments of this application.

The network device 102 may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The network device 102 may be a macro base station, may be a micro base station or an indoor base station, may be a relay node or a donor node, or the like. A specific technology and a specific device form that are used by the network device 102 are not limited in embodiments of this application. For ease of description, the following provides descriptions by using an example in which the base station serves as the network device.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal function may be performed by a module (for example, a chip or a modem) in the terminal, or may be performed by an apparatus including the terminal function.

The foregoing describes the architecture for embodiments of this application. The following describes the method in embodiments of this application in detail.

FIG. 2 is a schematic flowchart of a communication method according to an embodiment of this application. Optionally, the method may be applied to the foregoing communication system, for example, the communication system shown in FIG. 1. As shown in FIG. 2, the communication method may include step 201 to step 205. It should be understood that, for ease of description in this application, a sequence of 201 to 205 is used for description, but this is not intended to limit execution that is necessary in the foregoing sequence. An execution sequence, execution time, a quantity of execution times, and the like of the foregoing one or more steps are not limited in embodiments of this application. The following provides descriptions by using an example in which step 201 and step 205 in the communication method are performed by a base station, and step 202 to step 204 are performed by a terminal. This application is also applicable to other execution bodies. Step 201 to step 205 are specifically as follows.

201: The base station sends a first reference signal to the terminal.

The first reference signal may be a channel state information-reference signal (Channel State Information-Reference Signal, CSI-RS).

202: The terminal receives the first reference signal.

The terminal receives the first reference signal from the base station.

203: The terminal obtains a first parameter and a second parameter based on the first reference signal, where the first parameter indicates an association relationship between channel gains of a plurality of subchannels, and the second parameter indicates a channel gain of a first subchannel in the subchannels.

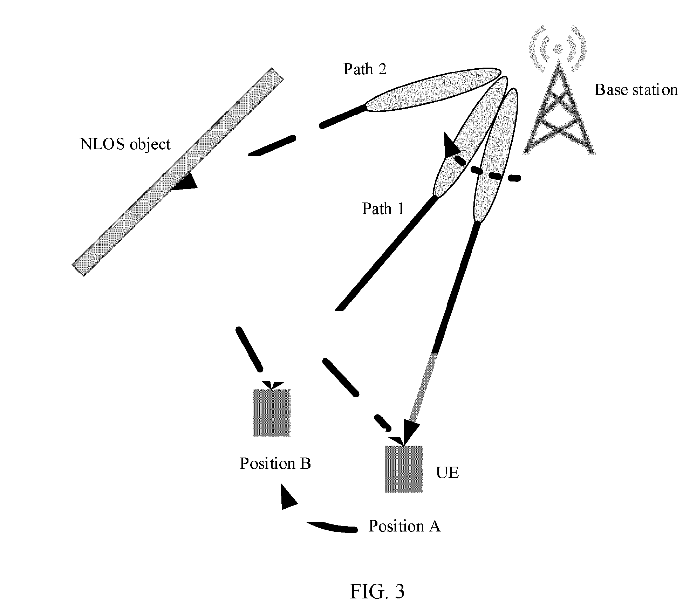

FIG. 3 is a diagram of a relative relationship between subchannels according to this embodiment of this application. The figure includes a base station and terminal UE, and further includes a path 1 (a line-of-sight (line-of-sight, LoS) path, that is, a subchannel 1 on which a transmit antenna and a receive antenna transmit signals at a distance at which "the transmit antenna and the receive antenna can see each other") and a path 2 (a non-line-of-sight (non-line-of-sight, NLoS) path, that is, a subchannel 2 on which light obtained through multiple times of diffuse reflections is used for reconstructing information about a blocked target). When the UE changes from a position A to a position B, all subchannels corresponding to the UE are two paths. In addition, a relative relationship between the path 1 and the path 2 in two positions in which the UE is located in sequence is basically unchanged. For the path 1, when the UE is located in the position A and the position B, there is no obstacle between the UE and the base station, and a distance between the UE and the base station is basically unchanged. For the path 2, when the UE is located in the position A and the position B, the path 2 does not change. In addition, because beams of the base station and the UE are thin, the path 1 and the path 2 can be distinguished. Therefore, within a specific range, eigenvalues that can be obtained through observation and that are of a plurality of subchannels of the UE are in a stable relative relationship.

Based on this, in this embodiment of this application, the first parameter and the second parameter are used to jointly indicate channel quality (for example, the channel gains) of the plurality of subchannels.

The first parameter indicates the association relationship between the channel gains of the plurality of subchannels. It may be understood that the first parameter indicates a distribution rule between the subchannels.

The second parameter indicates the channel gain of the first subchannel in the subchannels. The first subchannel may be any subchannel in the plurality of subchannels.

Optionally, the first subchannel is a subchannel with a largest channel gain in the plurality of subchannels. The first subchannel is a subchannel corresponding to a largest eigenvalue in a channel matrix.

A value of a channel gain of each subchannel may be obtained based on a square of an eigenvalue of the corresponding subchannel.

In a possible implementation, the terminal obtains the channel matrix based on the first reference signal, and then obtains the first parameter and the second parameter through calculation based on the channel matrix.

The channel matrix is channel state information in a MIMO system. The channel matrix includes eigenvalues of a plurality of subchannels. The eigenvalue may indicate a value of a channel gain of a corresponding subchannel.

Optionally, the first parameter is associated with at least one of a trace of a covariance matrix of the channel matrix, a rank of the channel matrix, and the second parameter.

For example, the first parameter $\gamma$ may be represented as:

$$\gamma = \frac{trace\{\boldsymbol{H} \cdot \boldsymbol{H}^{\mathrm{H}}\}/rank\{\boldsymbol{H}\}+1}{\alpha_1 \cdot \lambda_1 \cdot (1+1/rank\{\boldsymbol{H}\})+1}, \boldsymbol{H} \in \mathbb{C}^{Nrx \times Ntx}.$$

Herein, $H$ is the channel matrix; $trace\{\}$ is the trace; $rank\{\}$ is the rank; $\lambda_1$ is the second parameter; $\alpha_1$ is a constant; and $\mathbb{C}^{Nrx \times Ntx}$ represents space formed by a complex matrix (in a dimension of $Nrx$ rows and $Ntx$ columns), where $\mathbb{C}$ represents a complex number, $Nrx$ represents a quantity of receive antennas of a receiver, and $Ntx$ represents a quantity of transmit antennas of a transmitter.

Optionally, when a value of $\gamma$ is greater than 1, reciprocal processing may be performed on $\gamma$.

The second parameter $\lambda_1$ may be a largest eigenvalue in the channel matrix.

In this solution, the first parameter and the second parameter are described merely by using the foregoing descriptions as examples. The first parameter may also be represented by using another formula. The second parameter may further represent a channel gain of another subchannel, or the second parameter may be represented in another form. This is not strictly limited in this solution.

204: The terminal sends first information to the base station, where the first information indicates the first parameter and the second parameter, and the first parameter and the second parameter are used to determine a modulation and coding scheme MCS for each of a plurality of codewords.

After obtaining the first parameter and the second parameter, the terminal feeds back the first parameter and the second parameter to the base station.

205: The base station receives the first information.

The base station receives the first parameter and the second parameter that are sent by the terminal, to determine the modulation and coding scheme MCS for each of the plurality of codewords based on the first parameter and the second parameter.

A modulation and coding scheme (Modulation and Coding Scheme, MCS) is allocated by the base station by using a link adaptation algorithm. An allocated MCS is sent to the terminal in a signal manner through a physical downlink control channel (Physical Downlink Control Channel, PDCCH). The MCS defines a quantity of valid bits that can be carried by a resource element (Resource Element, RE).

Specifically, the MCS defines two parts: a modulation scheme (Modulation) and a code rate (Code Rate).

In this example, the terminal obtains the first parameter and the second parameter based on the first reference signal, and then sends the first parameter and the second parameter to the base station. The base station determines the modulation and coding scheme MCS for each of the plurality of codewords based on the received first parameter and second parameter. In this manner, channel gains of the MIMO subchannels are represented by combining two sent parameters. In this way, channel feedback overheads can be reduced, and spectral efficiency of the MIMO system can be improved.

In a possible implementation, the method further includes:
The base station obtains a signal-to-noise ratio of each of the plurality of codewords based on the first parameter, the second parameter, and a mapping relationship between a subchannel and a codeword. Then, the base station obtains the modulation and coding scheme MCS for each codeword based on the signal-to-noise ratio of each codeword.

The mapping relationship between the subchannel and the codeword is stipulated in a protocol. For example, in the NR protocol, when a user has eight subchannels (or eight transport layers) and two codewords, each codeword is mapped to four subchannels that are different from each other. Therefore, the mapping relationship between the subchannel and the codeword is preset.

A signal to interference plus noise ratio (Signal to Interference plus Noise Ratio, SINR) of a codeword is a signal-to-noise ratio, and is a ratio of signal power to noise power in a time-frequency domain range in which the codeword is located.

Optionally, the base station determines a first function based on the first parameter, where the first function indicates relative values of channel gains of the plurality of subchannels (that is, relative values of eigenvalues of the MIMO subchannels). Then, the base station obtains the signal-to-noise ratio of each of the plurality of codewords based on the first function, the second parameter, and the mapping relationship between a subchannel and a codeword. Further, the base station obtains the modulation and coding scheme MCS for each codeword based on the signal-to-noise ratio of each codeword.

For example, the base station determines the first function from a preset function cluster based on a value of the first parameter. The preset function cluster may be agreed on by the terminal and the base station. A relative value of an eigenvalue of each of the plurality of subchannels may be obtained based on the first function. Then, the eigenvalue of each subchannel may be obtained based on the relative value of the eigenvalue of each subchannel and the second parameter. A value of a channel gain of each subchannel is obtained by calculating a square of the eigenvalue of each subchannel. A signal-to-noise ratio of each of a plurality of codewords of the terminal may be obtained based on the channel gain of each subchannel and the mapping relationship between a subchannel and a codeword. An MCS for each codeword may be obtained through calculation based on the obtained signal-to-noise ratio.

Optionally, the preset function cluster $G(x)$ may be represented as:

$$G(x) = \begin{cases} x & 0.9 \leq \gamma \leq 1 \\ x^2 & 0.6 \leq \gamma < 0.9 \\ x^3 & 0.4 \leq \gamma < 0.6 \\ e^x & 0.2 \leq \gamma < 0.4 \\ e^{e^x} & 0 \leq \gamma < 0.2 \end{cases}$$

Herein, x=1, 2, ..., N, and represents a number of a subchannel, that is, the $x^{th}$ subchannel, and N represents a total quantity of subchannels of the terminal, and N is an integer not less than 2.

Based on the function cluster $G(x)$, the first function may be determined based on the value of the first parameter $\gamma$.

For example, when a value of the first parameter $\gamma$ meets $0.9 \leq \gamma \leq 1$, the first function $g(x)$ is $g(x) = x$.

For another example, when a value of the first parameter $\gamma$ meets $0.2 \leq \gamma \leq 0.4$, the first function $g(x)$ is $g(x) = e^x$.

Based on the determined first function, a relative value of an eigenvalue of each subchannel may be obtained based on a number of each subchannel. For example, when $0.9 \leq \gamma \leq 1$, the first function $g(x)$ is $g(x) = x$. In this case, a relative value of the eigenvalue of the 1st subchannel (subchannel number x=1) is $g(1) = 1$. A relative value of the eigenvalue of the 2nd subchannel (x=2) is g(2) = 2.

Further, an eigenvalue $\lambda_x$ of each subchannel may be obtained based on the second parameter $\lambda_1$ and the relative value of the eigenvalue of each subchannel. For example, the eigenvalue $\lambda_x$ of each subchannel may be expressed as:

$$\lambda_x = \frac{\lambda_1}{g(1)} \cdot g(x).$$

Herein, g(1) is the relative value of the eigenvalue of the 1st subchannel.

A value $\lambda_x^2$ of a channel gain of each subchannel may be obtained by calculating a square of the eigenvalue $\lambda_x$ of each subchannel, which may be expressed as:

$$\lambda_x^2 = \left( \frac{\lambda_1}{g(1)} \cdot g(x) \right)^2.$$

Based on this, the value of the channel gain of each subchannel is obtained.

Then, a "mapping relationship $f(x)$ between a subchannel and a codeword" and an inverse relationship $f^{-1}(m)$ that are used by the terminal are set, which may be expressed as follows:

$$m = f(x), f: x \rightarrow m;$$

and

$$f^{-1}(m) = \{x_{m,1}, x_{m,2}, \dots, x_{m,N_m}\}.$$

Herein, m = $1, 2, \dots, M$ represents a codeword number, that is, the $m^{th}$ codeword, and M represents a total quantity of codewords of the terminal. $N_m$ represents a total quantity of subchannels mapped to the $m^{th}$ codeword. m = $f(x)$, that is, $f$: $x \rightarrow$ m, which represents a mapping relationship between a subchannel x and a codeword m. $\rightarrow$ represents the mapping relationship.

The signal-to-noise ratio of the $m^{th}$ codeword of the terminal may be expressed as:

$$SINR_m = g\left(\lambda_x^2, \sigma_x^2, I_x^2 \middle| x \in f^{-1}(m)\right).$$

Herein, $\lambda_x^2,\ \sigma_x^2$, and $I_x^2$ respectively represent a channel gain, noise power, and interference power of the $x^{th}$ subchannel, and $g\left(\lambda_x^2, \sigma_x^2, I_x^2 \middle| x \in f^{-1}(m)\right)$ represent a process of generating $SINR_m$ through the channel gain, the noise power, and the interference power of the subchannel corresponding to the $m^{th}$ codeword. This process is implemented internally. The noise may be obtained by excluding an estimated signal on a given time-frequency resource grid, and the noise power $\sigma_x^2$ may be estimated. The interference power $I_x^2$ can be measured through the zero-power CSI-RS.

A relationship between $SINR_m$ of a codeword and a value (an order) of the modulation and coding scheme MCS for the codeword may be expressed as:

$$MCS_m = SINR_m + \Delta_m.$$

Herein, $MCS_m$ indicates an order of an MCS for the $m^{th}$ codeword; and $\Delta_m$ indicates an adjustment factor from an SINR to an order of an MCS for the $m^{th}$ codeword. The foregoing process of resolving the order of the MCS may be implemented internally, for example, may be obtained through outer loop link adaptation (Outer Loop Link Adaptation, OLLA).

The base station may obtain the MCS for each codeword based on the obtained order of the MCS for each codeword, for subsequent scheduling processing.

In this embodiment of this application, the terminal obtains the first parameter and the second parameter through calculation from the base station based on the first reference signal. The two parameters indicate channel quality (such as a channel gain) of the MIMO subchannels. Then, the terminal sends the two parameters to the base station, so that the base station determines the modulation and coding scheme for each codeword of the terminal based on the first parameter and the second parameter. In this manner, the terminal does not need to send a channel quality indicator CQI of each codeword, but sends only the first parameter and the second parameter, so that the base station can determine the modulation and coding scheme for each codeword. In this way, channel feedback overheads can be reduced, and spectral efficiency of the MIMO system can be improved.

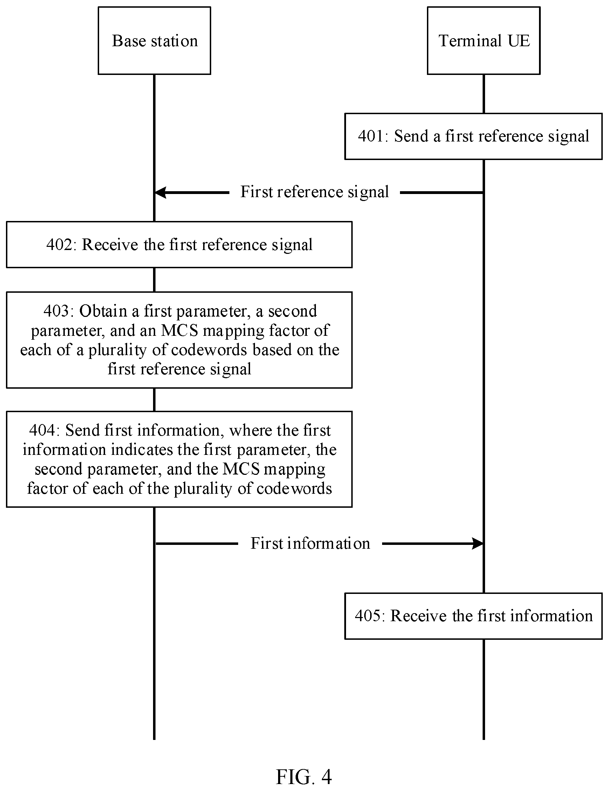

Based on the foregoing embodiment, FIG. 4 is a schematic flowchart of another communication method according to an embodiment of this application. Optionally, the method may be applied to the foregoing communication system, for example, the communication system shown in FIG. 1. As shown in FIG. 4, the communication method may include step 401 to step 405. It should be understood that, for ease of description in this application, a sequence of 401 to 405 is used for description, but this is not intended to limit execution that is necessary in the foregoing sequence. An execution sequence, execution time, a quantity of execution times, and the like of the foregoing one or more steps are not limited in embodiments of this application. The following uses an example in which step 401 and step 405 of the communication method are performed by a terminal, and step 402 to step 404 are performed by a base station for description. This application is also applicable to other execution bodies. Step 401 to step 405 are specifically as follows.

401: The terminal sends a first reference signal to the base station.

The first reference signal may be a sounding reference signal (Sounding Reference Signal, SRS).

402: The base station receives the first reference signal.

The base station receives the first reference signal from the terminal.

403: The base station obtains a first parameter, a second parameter, and an MCS mapping factor of each of a plurality of codewords based on the first reference signal, where the first parameter indicates an association relationship between channel gains of a plurality of subchannels, the second parameter indicates a channel gain of a first subchannel in the subchannels, and the MCS mapping factor of each codeword indicates an adjustment amount of mapping each codeword from a signal-to-noise ratio to a corresponding MCS.

In a possible implementation, the base station obtains a channel matrix based on the first reference signal, and then obtains the first parameter and the second parameter through calculation based on the channel matrix.

Optionally, the first parameter is associated with at least one of a trace of a covariance matrix of the channel matrix, a rank of the channel matrix, and the second parameter.

For example, the first parameter $\gamma$ may be represented as:

$$\gamma = \frac{trace\{H \cdot H^{\mathrm{H}}\}/rank\{H\}+1}{\alpha_1 \cdot \lambda_1 \cdot (1+1/rank\{H\})+1}, H \in \mathbb{C}^{Nrx \times Ntx}.$$

Herein, *H* is the channel matrix; *trace*{} is the trace; *rank*{} is the rank; $\lambda_1$ is the second parameter; $\alpha_1$ is a constant; and $\mathbb{C}^{Nrx \times Ntx}$ represents space formed by a complex matrix (in a dimension of *Nrx* rows and *Ntx* columns), where $\mathbb{C}$ represents a complex number, *Nrx* represents a quantity of receive antennas of a receiver, and *Ntx* represents a quantity of transmit antennas of a transmitter.

The second parameter $\lambda_1$ may be a largest eigenvalue in the channel matrix. A value of a channel gain of each subchannel may be obtained based on a square of an eigenvalue of the corresponding subchannel.

In this solution, the first parameter and the second parameter are described merely by using the foregoing descriptions as examples. The first parameter may also be represented by using another formula. The second parameter may further represent a channel gain of another subchannel, or the second parameter may be represented in another form. This is not strictly limited in this solution.

Because radio propagation environments of all codewords are different, optimal MCSs are not completely the same. Therefore, a base station needs to calculate the MCS mapping factor of each codeword. In this way, after impact of the MCS mapping factor of each codeword is considered, each codeword may use an optimal MCS to transmit data.

The MCS mapping factor is an adjustment amount of mapping from the signal-to-noise ratio SINR to the MCS.

In a possible implementation, the base station obtains a signal-to-noise ratio of each of the plurality of codewords based on the first parameter, the second parameter, and a mapping relationship between a subchannel and a codeword. The base station obtains the modulation and coding scheme MCS for each codeword based on the signal-to-noise ratio of each codeword. Then, the base station obtains the MCS mapping factor of each codeword through calculation based on the signal-to-noise ratio of each codeword and the MCS for each codeword.

The following describes an implementation of calculating the MCS for each codeword by the base station.

Optionally, the base station determines a first function based on the first parameter, where the first function indicates relative values of the channel gains of the MIMO subchannels. Then, the base station obtains the signal-to-noise ratio of each of the plurality of codewords based on the first function, the second parameter, and the mapping relationship between a subchannel and a codeword. Further, the base station obtains the modulation and coding scheme MCS for each codeword based on the signal-to-noise ratio of each codeword.

For example, the base station determines the first function from a preset function cluster based on a value of the first parameter. The preset function cluster may be agreed on by the terminal and the base station. A relative value of an eigenvalue of each subchannel in the MIMO subchannels may be obtained based on the first function. Then, the eigenvalue of each subchannel may be obtained based on the relative value of the eigenvalue of each subchannel and the second parameter. A value of a channel gain of each subchannel is obtained by calculating a square of the eigenvalue of each subchannel. A signal-to-noise ratio of each of a plurality of codewords of the terminal may be obtained based on the channel gain of each subchannel and the mapping relationship between a subchannel and a codeword. An MCS for each codeword may be obtained through calculation based on the obtained signal-to-noise ratio.

For an implementation in which the base station obtains the MCS for each codeword through calculation, refer to the descriptions of step 205 in the embodiment shown in FIG. 2, and details are not described herein.

The following describes an implementation in which the base station obtains the MCS mapping factor through calculation.

The signal-to-noise ratio of the $m^{th}$ codeword of the terminal may be expressed as:

$$SINR_m = g\left(\lambda_x^2, \sigma_x^2, I_x^2 \big| x \in f^{-1}(m)\right).$$

Herein, $\lambda_x^2$, $\sigma_x^2$, and $I_x^2$ respectively represent a channel gain, noise power, and interference power of the $x^{th}$ subchannel, and $g\left(\lambda_x^2, \sigma_x^2, I_x^2 \big| x \in f^{-1}(m)\right)$ represent a process of generating $SINR_m$ through the channel gain, the noise power, and the interference power of the subchannel corresponding to the $m^{th}$ codeword. For the descriptions of this part, refer to the descriptions of step 205 in the embodiment shown in FIG. 2, and details are not described herein again.

A relationship between $SINR_m$ of a codeword and an order of the modulation and coding scheme MCS for the codeword may be expressed as:

$$MCS_m = SINR_m + \Delta_m.$$

Herein, $MCS_m$ indicates an order of an MCS for the $m^{th}$ codeword; and $\Delta_m$ indicates an adjustment factor (namely, an MCS mapping factor) from an SINR to an order of an MCS for the $m^{th}$ codeword. The foregoing process of resolving the order of the MCS may be implemented internally, for example, may be obtained through outer loop link adaptation OLLA.

The base station may obtain the MCS mapping factor $\Delta_m$ of each codeword through calculation based on the MCS and signal-to-noise ratio of each codeword.

404: The base station sends first information to the terminal, where the first information indicates the first parameter, the second parameter, and an MCS mapping factor of each of the plurality of codewords, and the first parameter, the second parameter, and the MCS mapping factor of each codeword are used to determine the modulation and coding scheme MCS for each codeword.

The base station sends the first parameter, the second parameter, and the MCS mapping factor of each of the plurality of codewords to the terminal.

405: The terminal receives the first information.

The terminal receives the first parameter, the second parameter, and the MCS mapping factor of each codeword that are sent by the base station, to determine the modulation and coding scheme MCS for each codeword based on the first parameter, the second parameter, and the MCS mapping factor of each codeword.

**In** this example, the base station obtains the first parameter, the second parameter, and the MCS mapping factor of each codeword based on the first reference signal, and then sends the first parameter, the second parameter, and the MCS mapping factor of each codeword to the terminal. The terminal determines the modulation and coding scheme MCS for each of the plurality of codewords based on the received first parameter, second parameter, and MCS mapping factor of each codeword. **In** this manner, channel gains of the **MIMO** subchannels are represented by combining two sent parameters. **In** this way, channel scheduling indication overheads can be reduced, and spectral efficiency of a system can be improved.

In a possible implementation, the method further includes:
The terminal obtains a signal-to-noise ratio of each of the plurality of codewords based on the first parameter, the second parameter, and a mapping relationship between a subchannel and a codeword. Then, the terminal obtains the modulation and coding scheme MCS for each codeword based on the signal-to-noise ratio of each codeword and the MCS mapping factor of each codeword.

In a possible implementation, the MCS mapping factor of each codeword may be preset.

In another possible implementation, the MCS mapping factor of each codeword may be preconfigured by the base station.

Optionally, the terminal determines the first function based on the first parameter. Then, the terminal obtains the signal-to-noise ratio of each of the plurality of codewords based on the first function, the second parameter, and the mapping relationship between a subchannel and a codeword. Further, the terminal obtains the modulation and coding scheme MCS for each codeword based on the signal-to-noise ratio of each codeword and the MCS mapping factor of each codeword, for subsequent scheduling processing for a receiver.

For a specific description of this part, refer to the descriptions of step 403. Details are not described herein.

**In** this embodiment of this application, the base station obtains the first parameter, the second parameter, and the MCS mapping factor of each codeword based on the received first reference signal. The base station sends the first parameter, the second parameter, and the MCS mapping factor of each codeword to the terminal, so that the terminal determines the MCS for each codeword based on the first parameter, the second parameter, and the MCS mapping factor of each codeword. In this manner, the base station sends only the first parameter, the second parameter, and the MCS mapping factor, so that the terminal can determine the MCS for each codeword. In this way, channel scheduling indication overheads can be reduced, and spectral efficiency of the MIMO system can be improved.

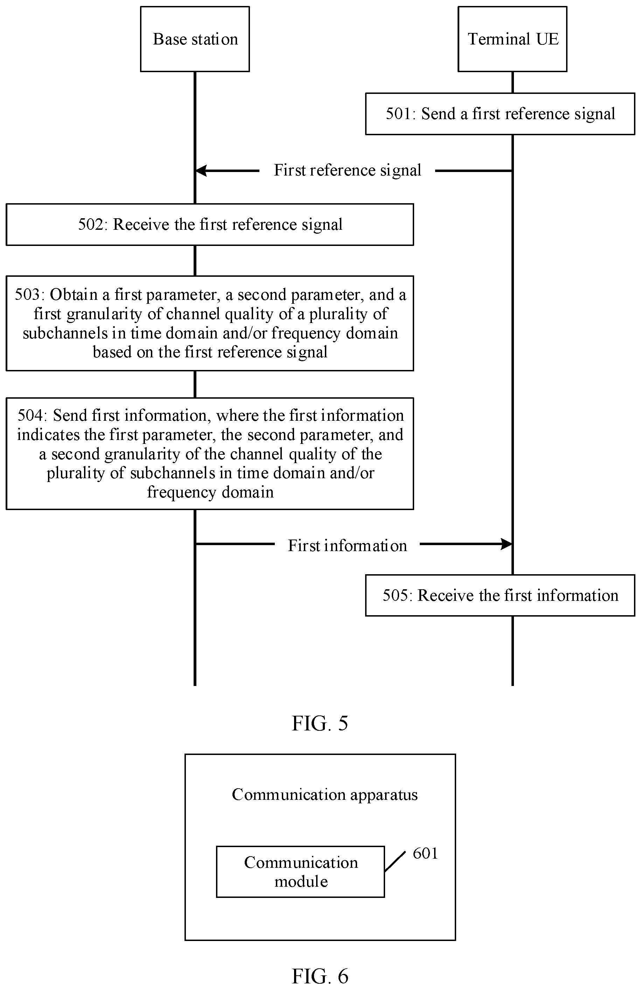

In the foregoing embodiments shown in FIG. 2 and FIG. 4, an example in which the first parameter and the second parameter are used to determine the modulation and coding scheme MCS for each of the plurality of codewords is used for description. The following uses an example in which the first parameter and the second parameter shown in FIG. 5 are used to determine a first granularity of channel quality of the MIMO subchannels in time domain and/or frequency domain for description.

FIG. 5 is a schematic flowchart of still another communication method according to an embodiment of this application. Optionally, the method may be applied to the foregoing communication system, for example, the communication system shown in FIG. 1. As shown in FIG. 5, the communication method may include step 501 to step 505. It should be understood that, for ease of description in this application, a sequence of 501 to 505 is used for description, but this is not intended to limit execution that is necessary in the foregoing sequence. An execution sequence, execution time, a quantity of execution times, and the like of the foregoing one or more steps are not limited in embodiments of this application. The following uses an example in which step 501 and step 505 of the communication method are performed by a terminal, and step 502 to step 504 are performed by a base station for description. This application is also applicable to other execution bodies. Step 501 to step 505 are specifically as follows.

501: The terminal sends a first reference signal to the base station.

The first reference signal may be a sounding reference signal SRS.

502: The base station receives the first reference signal.

The base station receives the first reference signal from the terminal.

503: The base station obtains, based on the first reference signal, a first parameter, a second parameter, and a first granularity of channel quality of a plurality of subchannels in time domain and/or frequency domain, where the first parameter indicates an association relationship between channel gains of the plurality of subchannels, and the second parameter indicates a channel gain of a first subchannel in the subchannels.

For an implementation in which the base station obtains the first parameter and the second parameter based on the first reference signal, refer to the descriptions of step 403 in the embodiment shown in FIG. 4. Details are not described herein.

The base station and the terminal agree on a granularity of channel quality of the MIMO subchannels in time domain and/or frequency domain, to ensure performance of a MIMO system.

Optionally, channel quality of all subchannels in this solution is at a same first granularity in time domain and/or frequency domain.

In a possible implementation, the base station obtains the first granularity of the channel quality of the subchannels in time domain through calculation based on a variation of the first parameter in time domain and a preset threshold.

For example, when the first granularity of the channel quality of the plurality of subchannels in time domain is determined, the first parameter $\gamma$ is represented as:

$$\gamma(t) = \frac{trace\{H(t) \cdot H^{\mathrm{H}}(t)\}/rank\{H(t)\}+1}{\alpha_1 \cdot \lambda_1(t) \cdot (1+1/rank\{H(t)\})+1}, H(t) \in \mathbb{C}^{Nrx \times Ntx}.$$

Herein, the dependent variable $t$ represents time, $H(t)$ represents a channel matrix at the time t, and $\lambda_1(t)$ represents a 1st eigenvalue of the channel matrix $H(t)$, that is, a value of a channel gain of a 1st subchannel. Correspondingly, $\lambda_n(t)$ represents an eigenvalue of the $n$th subchannel at the time t. For explanations of other parameters, refer to the foregoing descriptions, and details are not described herein.

When the first parameter $\gamma(t)$ meets the following condition, $\Delta t$ is the first granularity of the channel quality of all of the plurality of subchannels in time domain:

$$|\gamma(t) - \gamma(t + \Delta t)| > \beta_0.$$

Herein, $\beta_0$ is the preset threshold.

Certainly, the first parameter may also be determined based on another condition, for example, when $\gamma(t)$ meets the following condition, $\Delta t$ is the first granularity of the channel quality of all the subchannels in time domain:

$$|\gamma(t) - \gamma(t + \Delta t)| > \beta \cdot |\gamma(t)|.$$

Herein, $\beta$ is the preset threshold.

The base station may further obtain the first granularity of the channel quality of the subchannels in frequency domain through calculation based on the variation of the first parameter in frequency domain and the preset threshold.

For example, when the first granularity of the channel quality of the subchannels in frequency domain is determined, the first parameter $\gamma$ is represented as:

$$\gamma(f) = \frac{trace\{\boldsymbol{H}(f)\cdot\boldsymbol{H}^{\mathrm{H}}(f)\}/rank\{\boldsymbol{H}(f)\}+1}{\alpha_1\cdot\lambda_1(f)\cdot(1+1/rank\{\boldsymbol{H}(f)\})+1}, \boldsymbol{H}(f) \in \mathbb{C}^{Nrx\times Ntx}.$$

Herein, the dependent variable f represents a frequency, $H(f)$ represents a channel matrix in the frequency f, and $\lambda_1(f)$ represents a 1st eigenvalue of the channel matrix $H(f)$, that is, a value of a channel gain of a 1st subchannel. Correspondingly, $\lambda_n(f)$ represents an eigenvalue of the $n^{\mathrm{th}}$ subchannel in the frequency f.

When the first parameter $\gamma(f)$ meets the following condition, $\Delta f$ is the first granularity of the channel quality of all the subchannels in frequency domain:

$$|\gamma(f) - \gamma(f + \Delta f)| > \beta_1.$$

Herein, $\beta_1$ is the preset threshold.

Certainly, the first parameter may also be determined based on another condition, for example, when the first parameter $\gamma(f)$ meets the following condition, $\Delta f$ is the first granularity of the channel quality of all the subchannels in frequency domain:

$$|\gamma(f) - \gamma(f + \Delta f)| > \beta_2 \cdot |\gamma(f)|.$$

$\beta_2$ is the preset threshold.

In another possible implementation, the base station obtains the first granularity of the channel quality of the plurality of subchannels in time domain through calculation based on a variation of the second parameter in time domain and a preset threshold.

For example, when the first granularity of channel quality of the MIMO subchannels in time domain is determined, when the second parameter $\lambda_1(t)$ meets the following condition, $\Delta t$ is the first granularity of the channel quality of all the subchannels in time domain:

$$|\lambda_1(t) - \lambda_1(t + \Delta t)| > \alpha_0.$$

Herein, $\alpha_0$ is the preset threshold.

Certainly, the second parameter may also be determined based on another condition, for example, when the second parameter $\lambda_1(t)$ meets the following condition, $\Delta t$ is the first granularity of the channel quality of all the subchannels in time domain:

$$|\lambda_1(t) - \lambda_1(t + \Delta t)| > \alpha \cdot |\lambda_1(t)|.$$

Herein, $\alpha$ is the preset threshold.

The base station may further obtain the first granularity of the channel quality of the plurality of subchannels in frequency domain through calculation based on the variation of the second parameter in frequency domain and the preset threshold.

For example, when the first granularity of the channel quality of the plurality of subchannels in frequency domain is determined, when the second parameter $\lambda_1(f)$ meets the following condition, $\Delta f$ is the first granularity of the channel quality of all of the plurality of the subchannels in frequency domain:

$$|\lambda_1(f) - \lambda_1(f + \Delta f)| > \alpha_1.$$

Herein, $\alpha_1$ is the preset threshold.

Certainly, the second parameter may also be determined based on another condition, for example, when the second parameter $\lambda_1(f)$ meets the following condition, $\Delta f$ is the first granularity of the channel quality of all the subchannels in frequency domain:

$$|\lambda_1(f) - \lambda_1(f + \Delta f)| > \alpha_2 \cdot |\lambda_1(f)|.$$

Herein, $\alpha_2$ is the preset threshold.

In still another possible implementation, the base station obtains the first granularity of the channel quality of all the subchannels in time domain through calculation based on the variation of the first parameter in time domain, the variation of the second parameter in time domain, and the preset threshold.

For example, when the first parameter $\gamma(t)$ and the second parameter $\lambda_1(t)$ meet any one of the following conditions, $\Delta t$ is the first granularity of the channel quality of all the subchannels in time domain:

$$|\gamma(t) - \gamma(t + \Delta t)| > \beta_3;$$

and

$$|\lambda_1(t) - \lambda_1(t + \Delta t)| > \alpha_3.$$

Herein, $\beta_3$ and $\alpha_3$ are both preset thresholds.

Alternatively, when the first parameter $\gamma(t)$ and the second parameter $\lambda_1(t)$ meet any one of the following conditions, $\Delta t$ is the first granularity of the channel quality of all the subchannels in time domain:

$$|\gamma(t) - \gamma(t + \Delta t)| > \beta_4 \cdot |\gamma(t)|;$$

and

$$|\lambda_1(t) - \lambda_1(t + \Delta t)| > \alpha_4 \cdot |\lambda_1(t)|.$$

Herein $\beta_4$ and $\alpha_4$ are both preset thresholds.

The base station further obtains the first granularity of the channel quality of all the subchannels in frequency domain through calculation based on the variation of the first parameter in frequency domain, the variation of the second parameter in frequency domain, and the preset threshold.

For example, when the first parameter $\gamma(f)$ and the second parameter $\lambda_1(f)$ meet any one of the following conditions, $\Delta f$ is the first granularity of the channel quality of all the subchannels in frequency domain:

$$|\gamma(f) - \gamma(f + \Delta f)| > \beta_5;$$

and

$$|\lambda_1(f) - \lambda_1(f + \Delta f)| > \alpha_5.$$

Herein, $\beta_5$ and $\alpha_5$ are both preset thresholds.

Alternatively, when the first parameter $\gamma(f)$ and the second parameter $\lambda_1(f)$ meet any one of the following conditions, $\Delta f$ is the first granularity of the channel quality of all the subchannels in frequency domain:

$$|\gamma(f) - \gamma(f + \Delta f)| > \beta_6 \cdot |\gamma(f)|;$$

and

$$|\lambda_1(f) - \lambda_1(f + \Delta f)| > \alpha_6 \cdot |\lambda_1(f)|.$$

Herein, $\beta_6$ and $\alpha_6$ are both preset thresholds.

504: The base station sends first information to the terminal, where the first information indicates the first parameter, the second parameter, and a second granularity of the channel quality of the subchannels in time domain and/or frequency domain, and the first parameter and the second parameter are used to determine the first granularity of the channel quality of the subchannels in time domain and/or frequency domain.

The base station may determine the first granularity of the channel quality of the subchannels in time domain and/or frequency domain in step 503. Further, the base station may determine the second granularity based on the first granularity.

Optionally, the base station may indicate, based on the obtained first granularity, the second granularity not greater than the first granularity to the terminal. For example, if the first granularity is 4 RBs, the base station determines 2 RBs, 3 RBs, 4 RBs, or the like as the second granularity.

505: The terminal receives the first information.

In a possible implementation, the terminal may determine the first granularity based on the received first parameter and second parameter. Further, the terminal uses the first granularity.

In another possible implementation, the terminal determines, based on the second granularity indicated by the base station, that the terminal uses the second granularity.

In still another possible implementation, the terminal may determine the first granularity based on the received first parameter and second parameter. Further, the terminal may determine, based on the first granularity determined by the terminal and the second granularity indicated by the base station, the granularity used by the terminal. For example, the terminal preferentially uses the second granularity indicated by the base station. Alternatively, the terminal may use any granularity that is not greater than the first granularity.

Certainly, the terminal may further determine, in another manner, the granularity used by the terminal. This is not strictly limited in this solution.

In this example, the base station obtains the first parameter, the second parameter, and the second granularity of the channel quality of the MIMO subchannels in time domain and/or frequency domain based on the first reference signal, and then sends the first parameter, the second parameter, and the second granularity to the terminal. The terminal may determine, based on the received first parameter, second parameter, and second granularity, a granularity used by the terminal in time domain and/or frequency domain. In this manner, based on the sent first parameter, second parameter, and second granularity of the channel quality of the MIMO subchannels in time domain and/or frequency domain, a receiver can adaptively determine a time-frequency domain resource granularity. This improves spectral efficiency of a MIMO system.

It should be noted that, in various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment. For example, the embodiments shown in FIG. 2 and FIG. 5 may be combined with each other. For another example, the embodiments shown in FIG. 4 and FIG. 5 may also be combined with each other. This is not limited in this solution.

The methods in embodiments of this application are described in detail above. Apparatuses in embodiments of this application are provided below. It may be understood that, in the apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, a communication apparatus is provided, including a module (or a means) configured to implement steps performed by a terminal in any one of the foregoing methods. For another example, another communication apparatus is further provided, including a module (or means) configured to implement steps performed by the base station in any one of the foregoing methods.

For example, FIG. 6 is a diagram of a structure of a communication apparatus according to an embodiment of this application. The communication apparatus is configured to implement the foregoing communication methods, for example, the communication method shown in FIG. 2, FIG. 4, or FIG. 5.

As shown in FIG. 6, the apparatus may include a communication module 601. Details are described as follows.

The communication module 601 is configured to send a first reference signal.

The communication module 601 is further configured to receive first information, where the first information indicates a first parameter and a second parameter, the first parameter and the second parameter are obtained based on the first reference signal, the first parameter indicates an association relationship between channel gains of a plurality of subchannels, the second parameter indicates a channel gain of a first subchannel in the MIMO subchannels, and the first parameter and the second parameter are used to determine one or more of the following:

a modulation and coding scheme MCS for each of a plurality of codewords, and

a first granularity of channel quality of the MIMO subchannels in time domain and/or frequency domain.

In a possible implementation, the first information further indicates an MCS mapping factor of each of the plurality of codewords, and the MCS mapping factor of each codeword indicates an adjustment amount of mapping each codeword from a signal-to-noise ratio to a corresponding MCS.

In a possible implementation, the first parameter and the second parameter are used to determine the modulation and coding scheme MCS for each of the plurality of codewords, and the apparatus further includes a processing module, configured to:

obtain a signal-to-noise ratio of each of the plurality of codewords based on the first parameter, the second parameter, and a mapping relationship between a subchannel and a codeword; and

obtain the modulation and coding scheme MCS for each codeword based on the signal-to-noise ratio of each codeword.

In a possible implementation, the processing module is further configured to:

determine a first function based on the first parameter, where the first function indicates relative values of the channel gains of the MIMO subchannels; and

obtain the signal-to-noise ratio of each of the plurality of codewords based on the first function, the second parameter, and the mapping relationship between a subchannel and a codeword.

In a possible implementation, the processing module is further configured to:

obtain the modulation and coding scheme MCS for each codeword based on the signal-to-noise ratio of each codeword and an MCS mapping factor of each codeword, where the MCS mapping factor of each codeword indicates an adjustment amount of mapping each codeword from a signal-to-noise ratio to a corresponding MCS.

In a possible implementation, the MCS mapping factor of each codeword is preset, or the MCS mapping factor of each codeword is preconfigured.

In a possible implementation, the first parameter is associated with at least one of a trace of a covariance matrix of a channel matrix, a rank of the channel matrix, and the second parameter, and the channel matrix is obtained based on the first reference signal.

In a possible implementation, the first subchannel is a subchannel corresponding to a largest eigenvalue in the channel matrix.

In a possible implementation, the first parameter and the second parameter are used to determine the first granularity of the channel quality of the MIMO subchannels in time domain and/or frequency domain, and the apparatus further includes the processing module, configured to:

obtain the first granularity of the channel quality of the MIMO subchannels in time domain and/or frequency domain through calculation based on a variation of the first parameter and/or the second parameter in time domain and/or frequency domain and a preset threshold.

In a possible implementation, the first information further indicates a second granularity of the channel quality of the MIMO subchannels in time domain and/or frequency domain.

In a possible implementation, the apparatus further includes the processing module, configured to:

obtain the first granularity of the channel quality of the subchannels in time domain and/or frequency domain through calculation based on a variation of the first parameter and/or the second parameter in time domain and/or frequency domain and a preset threshold; and

determine the second granularity based on the first granularity.

For descriptions of the foregoing modules, refer to the descriptions of the foregoing embodiments. Details are not described herein.

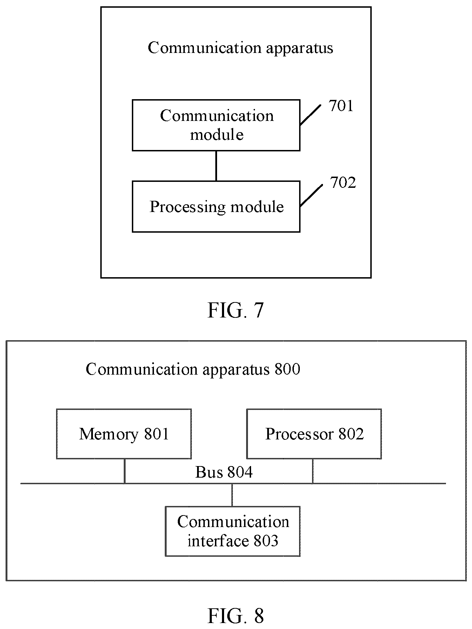

For another example, FIG. 7 is a diagram of a structure of another communication apparatus according to an embodiment of this application. The communication apparatus is configured to implement the foregoing communication methods, for example, the communication method shown in FIG. 2, FIG. 4, or FIG. 5.

As shown in FIG. 7, the apparatus may include a communication module 701 and a processing module 702. Details are described as follows.

The communication module 701 is configured to receive a first reference signal.

The processing module 702 is configured to a first parameter and a second parameter based on the first reference signal, where the first parameter indicates an association relationship between channel gains of a plurality of subchannels, and the second parameter indicates a channel gain of a first subchannel in the subchannels.

The communication module is further configured to send first information, where the first information indicates the first parameter and the second parameter, and the first parameter and the second parameter are used to determine one or more of the following:

a modulation and coding scheme MCS for each of a plurality of codewords, and
a first granularity of channel quality of the subchannels in time domain and/or frequency domain.

In a possible implementation, the first information further indicates an MCS mapping factor of each of the plurality of codewords, and the MCS mapping factor of each codeword indicates an adjustment amount of mapping each codeword from a signal-to-noise ratio to a corresponding MCS.

In a possible implementation, the first parameter and the second parameter are used to determine the modulation and coding scheme MCS for each of the plurality of codewords, and the processing module 702 is further configured to:

obtain a signal-to-noise ratio of each of the plurality of codewords based on the first parameter, the second parameter, and a mapping relationship between a subchannel and a codeword; and
obtain the modulation and coding scheme MCS for each codeword based on the signal-to-noise ratio of each codeword.

In a possible implementation, the processing module 702 is further configured to:

determine a first function based on the first parameter, where the first function indicates relative values of the channel gains of the subchannels; and
obtain the signal-to-noise ratio of each of the plurality of codewords based on the first function, the second parameter, and the mapping relationship between a subchannel and a codeword.

In a possible implementation, the processing module 702 is further configured to:
obtain an MCS mapping factor of each codeword through calculation based on the signal-to-noise ratio of each codeword and the MCS for each codeword, where the MCS mapping factor of each codeword indicates an adjustment amount of mapping each codeword from a signal-to-noise ratio to a corresponding MCS.

In a possible implementation, the first parameter is associated with at least one of a trace of a covariance matrix of a channel matrix, a rank of the channel matrix, and the second parameter, and the channel matrix is obtained based on the first reference signal.

In a possible implementation, the first subchannel is a subchannel corresponding to a largest eigenvalue in the channel matrix.

In a possible implementation, the first information further indicates a second granularity of the channel quality of the subchannels in time domain and/or frequency domain.

In a possible implementation, the processing module 702 is further configured to:

obtain the first granularity of the channel quality of the subchannels in time domain and/or frequency domain through calculation based on a variation of the first parameter and/or the second parameter in time domain and/or frequency domain and a preset threshold; and
determine the second granularity based on the first granularity.

For descriptions of the foregoing modules, refer to the descriptions of the foregoing embodiments. Details are not described herein.

It should be understood that division of the modules in the foregoing apparatuses is merely logical function division. During actual implementation, all or some of the modules may be integrated into one physical entity, or may be physically separated. In addition, the modules in the communication apparatuses may be implemented in a form of software invoked by a processor. For example, the communication apparatus includes a processor. The processor is connected to a memory. The memory stores instructions. The processor invokes the instructions stored in the memory, to implement any one of the foregoing methods or implement functions of each module of the apparatus. The processor is, for example, a general-purpose processor, for example, a central processing unit (Central Processing Unit, CPU) or a microprocessor. The memory is a memory inside the apparatus or a memory outside the apparatus. Alternatively, the module in the apparatus may be implemented in a form of a hardware circuit, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All the modules of the foregoing apparatuses may be implemented in a form of software invoked by the processor, or all the modules may be implemented in a form of the hardware circuit, or some modules may be implemented in a form of software invoked by the processor, and a remaining part may be implemented in a form of the hardware circuit.

FIG. 8 is a diagram of a structure of hardware of still another communication apparatus according to an embodiment of this application. A communication apparatus 800 shown in FIG. 8 (the apparatus 800 may be specifically a computer device) includes a memory 801, a processor 802, a communication interface 803, and a bus 804. The memory 801, the processor 802, and the communication interface 803 are communicatively connected to each other through the bus 804.

The memory 801 may be a read-only memory (read-only memory, ROM), a static storage device, a dynamic storage device, or a random access memory (random access memory, RAM).

The memory 801 may store a program. When the program stored in the memory 801 is executed by the processor 802, the processor 802 and the communication interface 803 are configured to perform the steps of the communication method in embodiments of this application.

The processor 802 is a circuit having a signal processing capability. In an implementation, the processor 802 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 802 may implement a specific function by using a logical relationship of a hardware circuit, and the logical relationship of the hardware circuit is fixed or reconfigurable. For example, the processor 802 is a hardware circuit implemented by an ASIC or a programmable logic device PLD, for example, an FPGA. In the reconfigurable hardware circuit, a process in which the processor loads a configuration document to implement hardware circuit configuration may be understood as a process in which the processor loads instructions to implement functions of some or all of the foregoing modules. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 802 is configured to execute a related program, to implement functions that need to be performed by the units in the communication apparatus in embodiments of this application, or perform the communication method in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules of the apparatus may be integrated, or may be implemented independently. In an implementation, the modules may be integrated together and implemented in a form of a system-on-a-chip (system-on-a-chip, SOC). The SOC may include at least one processor, configured to implement any one of the methods or implement functions of the modules of the apparatus. Types of the at least one processor may be different, for example, the at least one processor includes a CPU and an FPGA, a CPU and an artificial intelligence processor, or a CPU and a GPU.

The communication interface 803 uses a transceiver apparatus, for example, but not limited to, a transceiver, to implement communication between the apparatus 800 and another device or a communication network. For example, data may be obtained through the communication interface 803.

The bus 804 may include a channel for transmitting information between the components (for example, the memory 801, the processor 802, and the communication interface 803) of the apparatus 800.

It should be noted that although the apparatus 800 shown in FIG. 8 only shows the memory, the processor, and the communication interface, in a specific implementation process, a person skilled in the art should understand that the apparatus 800 further includes other components that are necessary to implement normal running. In addition, based on a specific requirement, a person skilled in the art should understand that the apparatus 800 may further include hardware components for implementing other additional functions. In addition, a person skilled in the art should understand that the apparatus 800 may include only components required for implementing embodiments of this application, but not necessarily include all the components shown in FIG. 8.

An embodiment of this application further provides a communication apparatus. The communication apparatus includes one or more processors. The one or more processors are configured to execute a computer program stored in one or more memories, so that the communication apparatus implements the method according to any one of the implementations in the first aspect or the method according to any one of the implementations in the second aspect.

In a possible implementation, the communication apparatus further includes the one or more memories.

In a possible implementation, the communication apparatus is a chip or a chip system.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It may be clearly understood by a person skilled in the art that, for the purpose of convenient and brief description, for a detailed working process of the foregoing system, apparatus, and unit, refer to the specific descriptions of a corresponding step process in the foregoing method embodiments. Details are not described herein.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or assemblies may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   sending a first reference signal; and
   receiving first information, wherein the first information indicates a first parameter and a second parameter, the first parameter and the second parameter are obtained based on the first reference signal, the first parameter indicates an association relationship between channel gains of a plurality of subchannels, the second parameter indicates a channel gain of a first subchannel in the subchannels, and the first parameter and the second parameter are used to determine one or more of the following:

      a modulation and coding scheme MCS for each of a plurality of codewords, and
      a first granularity of channel quality of the subchannels in time domain and/or frequency domain.

2. The method according to claim 1, wherein the first information further indicates an MCS mapping factor of each of the plurality of codewords, and the MCS mapping factor of each codeword indicates an adjustment amount of mapping each codeword from a signal-to-noise ratio to a corresponding MCS.

3. The method according to claim 1, wherein the first parameter and the second parameter are used to determine the modulation and coding scheme MCS for each of the plurality of codewords; and the method further comprises:

   obtaining a signal-to-noise ratio of each of the plurality of codewords based on the first parameter, the second parameter, and a mapping relationship between a subchannel and a codeword; and
   obtaining the modulation and coding scheme MCS for each codeword based on the signal-to-noise ratio of each codeword.

4. The method according to claim 3, wherein the obtaining a signal-to-noise ratio of each of the plurality of codewords based on the first parameter, the second parameter, and a mapping relationship between a subchannel and a codeword comprises:

   determining a first function based on the first parameter, wherein the first function indicates relative values of the channel gains of the subchannels; and
   obtaining the signal-to-noise ratio of each of the plurality of codewords based on the first function, the second parameter, and the mapping relationship between a subchannel and a codeword.

5. The method according to claim 3 or 4, wherein the obtaining the modulation and coding scheme MCS for each codeword based on the signal-to-noise ratio of each codeword comprises:
   obtaining the modulation and coding scheme MCS for each codeword based on the signal-to-noise ratio of each codeword and an MCS mapping factor of each codeword, wherein the MCS mapping factor of each codeword indicates an adjustment amount of mapping each codeword from a signal-to-noise ratio to a corresponding MCS.

6. The method according to claim 5, wherein the MCS mapping factor of each codeword is preset, or the MCS mapping factor of each codeword is preconfigured.

7. The method according to any one of claims 1 to 6, wherein the first parameter is associated with at least one of a trace of a covariance matrix of a channel matrix, a rank of the channel matrix, and the second parameter, and the channel matrix is obtained based on the first reference signal.

8. The method according to claim 7, wherein the first subchannel is a subchannel corresponding to a largest eigenvalue in the channel matrix.

9. The method according to any one of claims 1 to 8, wherein the first parameter and the second parameter are used to determine the first granularity of the channel quality of the subchannels in time domain and/or frequency domain; and the method further comprises:
   obtaining the first granularity of the channel quality of the subchannels in time domain and/or frequency domain through calculation based on a variation of the first parameter and/or the second parameter in time domain and/or frequency domain and a preset threshold.

10. The method according to any one of claims 1 to 9, wherein the first information further indicates a second granularity of the channel quality of the subchannels in time domain and/or frequency domain.

11. A communication method, comprising:

    receiving a first reference signal;
    obtaining a first parameter and a second parameter based on the first reference signal, wherein the first parameter indicates an association relationship between channel gains of a plurality of subchannels, and the second parameter indicates a channel gain of a first subchannel in the subchannels; and
    sending first information, wherein the first information indicates the first parameter and the second parameter, and the first parameter and the second parameter are used to determine one or more of the following:

        a modulation and coding scheme MCS for each of a plurality of codewords, and
        a first granularity of channel quality of the subchannels in time domain and/or frequency domain.

12. The method according to claim 11, wherein the first information further indicates an MCS mapping factor of each of the plurality of codewords, and the MCS mapping factor of each codeword indicates an adjustment amount of mapping each codeword from a signal-to-noise ratio to a corresponding MCS.

13. The method according to claim 11, wherein the first parameter and the second parameter are used to determine the modulation and coding scheme MCS for each of the plurality of codewords; and the method further comprises:

    obtaining a signal-to-noise ratio of each of the plurality of codewords based on the first parameter, the second parameter, and a mapping relationship between a subchannel and a codeword; and
    obtaining the modulation and coding scheme MCS for each codeword based on the signal-to-noise ratio of each codeword.

14. The method according to claim 13, wherein the obtaining a signal-to-noise ratio of each of the plurality of codewords based on the first parameter, the second parameter, and a mapping relationship between a subchannel and a codeword comprises:

    determining a first function based on the first parameter, wherein the first function indicates relative values of the channel gains of the subchannels; and
    obtaining the signal-to-noise ratio of each of the plurality of codewords based on the first function, the second parameter, and the mapping relationship between a subchannel and a codeword.

15. The method according to claim 13 or 14, wherein the method further comprises:
    obtaining an MCS mapping factor of each codeword through calculation based on the signal-to-noise ratio of each codeword and the MCS for each codeword, wherein the MCS mapping factor of each codeword indicates an adjustment amount of mapping each codeword from a signal-to-noise ratio to a corresponding MCS.

16. The method according to any one of claims 11 to 15, wherein the first parameter is associated with at least one of a trace of a covariance matrix of a channel matrix, a rank of the channel matrix, and the second parameter, and the channel matrix is obtained based on the first reference signal.

17. The method according to claim 16, wherein the first subchannel is a subchannel corresponding to a largest eigenvalue in the channel matrix.

18. The method according to any one of claims 11 to 17, wherein the first information further indicates a second granularity of the channel quality of the subchannels in time domain and/or frequency domain.

19. The method according to claim 18, wherein the method further comprises:

obtaining the first granularity of the channel quality of the subchannels in time domain and/or frequency domain through calculation based on a variation of the first parameter and/or the second parameter in time domain and/or frequency domain and a preset threshold; and
determining the second granularity based on the first granularity.

20. A communication apparatus, comprising:

a communication module, configured to send a first reference signal, wherein
the communication module is further configured to receive first information, wherein the first information indicates a first parameter and a second parameter, the first parameter and the second parameter are obtained based on the first reference signal, the first parameter indicates an association relationship between channel gains of a plurality of subchannels, the second parameter indicates a channel gain of a first subchannel in the subchannels, and the first parameter and the second parameter are used to determine one or more of the following:

a modulation and coding scheme MCS for each of a plurality of codewords, and
a first granularity of channel quality of the subchannels in time domain and/or frequency domain.

21. The apparatus according to claim 20, wherein the first information further indicates an MCS mapping factor of each of the plurality of codewords, and the MCS mapping factor of each codeword indicates an adjustment amount of mapping each codeword from a signal-to-noise ratio to a corresponding MCS.

22. The apparatus according to claim 20, wherein the first parameter and the second parameter are used to determine the modulation and coding scheme MCS for each of the plurality of codewords, and the apparatus further comprises a processing module, configured to:

obtain a signal-to-noise ratio of each of the plurality of codewords based on the first parameter, the second parameter, and a mapping relationship between a subchannel and a codeword; and
obtain the modulation and coding scheme MCS for each codeword based on the signal-to-noise ratio of each codeword.

23. The apparatus according to claim 22, wherein the processing module is further configured to:

determine a first function based on the first parameter, wherein the first function indicates relative values of the channel gains of the subchannels; and
obtain the signal-to-noise ratio of each of the plurality of codewords based on the first function, the second parameter, and the mapping relationship between a subchannel and a codeword.

24. The apparatus according to claim 22 or 23, wherein the processing module is further configured to:
obtain the modulation and coding scheme MCS for each codeword based on the signal-to-noise ratio of each codeword and an MCS mapping factor of each codeword, wherein the MCS mapping factor of each codeword indicates an adjustment amount of mapping each codeword from a signal-to-noise ratio to a corresponding MCS.

25. The apparatus according to claim 24, wherein the MCS mapping factor of each codeword is preset, or the MCS mapping factor of each codeword is preconfigured.

26. The apparatus according to any one of claims 20 to 25, wherein the first parameter is associated with at least one of a trace of a covariance matrix of a channel matrix, a rank of the channel matrix, and the second parameter, and the channel matrix is obtained based on the first reference signal.

27. The apparatus according to claim 26, wherein the first subchannel is a subchannel corresponding to a largest eigenvalue in the channel matrix.

28. The apparatus according to any one of claims 20 to 27, wherein the first parameter and the second parameter are used to determine the first granularity of the channel quality of the subchannels in time domain and/or frequency domain, and the apparatus further comprises the processing module, configured to:
obtain the first granularity of the channel quality of the subchannels in time domain and/or frequency domain through calculation based on a variation of the first parameter and/or the second parameter in time domain and/or frequency domain and a preset threshold.

29. The apparatus according to any one of claims 20 to 28, wherein the first information further indicates a second granularity of the channel quality of the subchannels in time domain and/or frequency domain.

30. The apparatus according to claim 29, wherein the apparatus further comprises the processing module, configured to:

   obtain the first granularity of the channel quality of the subchannels in time domain and/or frequency domain through calculation based on a variation of the first parameter and/or the second parameter in time domain and/or frequency domain and a preset threshold; and
   determine the second granularity based on the first granularity.

31. A communication apparatus, comprising:

   a communication module, configured to receive a first reference signal; and
   a processing module, configured to a first parameter and a second parameter based on the first reference signal, wherein the first parameter indicates an association relationship between channel gains of a plurality of subchannels, and the second parameter indicates a channel gain of a first subchannel in the subchannels, wherein
   the communication module is further configured to send first information, wherein the first information indicates the first parameter and the second parameter, and the first parameter and the second parameter are used to determine one or more of the following:

      a modulation and coding scheme MCS for each of a plurality of codewords, and
      a first granularity of channel quality of the subchannels in time domain and/or frequency domain.

32. The apparatus according to claim 31, wherein the first information further indicates an MCS mapping factor of each of the plurality of codewords, and the MCS mapping factor of each codeword indicates an adjustment amount of mapping each codeword from a signal-to-noise ratio to a corresponding MCS.

33. The apparatus according to claim 31, wherein the first parameter and the second parameter are used to determine the modulation and coding scheme MCS for each of the plurality of codewords, and the processing module is further configured to:

   obtain a signal-to-noise ratio of each of the plurality of codewords based on the first parameter, the second parameter, and a mapping relationship between a subchannel and a codeword; and
   obtain the modulation and coding scheme MCS for each codeword based on the signal-to-noise ratio of each codeword.

34. The apparatus according to claim 33, wherein the processing module is further configured to:

   determine a first function based on the first parameter, wherein the first function indicates relative values of the channel gains of the subchannels; and
   obtain the signal-to-noise ratio of each of the plurality of codewords based on the first function, the second parameter, and the mapping relationship between a subchannel and a codeword.

35. The apparatus according to claim 33 or 34, wherein the processing module is further configured to:
   obtain an MCS mapping factor of each codeword through calculation based on the signal-to-noise ratio of each codeword and the MCS for each codeword, wherein the MCS mapping factor of each codeword indicates an adjustment amount of mapping each codeword from a signal-to-noise ratio to a corresponding MCS.

36. The apparatus according to any one of claims 31 to 35, wherein the first parameter is associated with at least one of a trace of a covariance matrix of a channel matrix, a rank of the channel matrix, and the second parameter, and the channel matrix is obtained based on the first reference signal.

37. The apparatus according to claim 36, wherein the first subchannel is a subchannel corresponding to a largest eigenvalue in the channel matrix.

38. The apparatus according to any one of claims 31 to 37, wherein the first information further indicates a second granularity of the channel quality of the subchannels in time domain and/or frequency domain.

39. The apparatus according to claim 38, wherein the processing module is further configured to:

obtain the first granularity of the channel quality of the subchannels in time domain and/or frequency domain through calculation based on a variation of the first parameter and/or the second parameter in time domain and/or frequency domain and a preset threshold; and
determine the second granularity based on the first granularity.

40. A communication apparatus, wherein the communication apparatus comprises one or more processors, and the one or more processors are configured to execute a computer program stored in one or more memories, so that the communication apparatus implements the method according to any one of claims 1 to 10 or the method according to any one of claims 11 to 19.

41. The communication apparatus according to claim 40, wherein the communication apparatus further comprises the one or more memories.

42. The communication apparatus according to claim 40 or 41, wherein the communication apparatus is a chip or a chip system.

43. A computer-readable storage medium, wherein the computer-readable storage medium stores instructions, and when the instructions are executed by a processor, the method according to any one of claims 1 to 10 or the method according to any one of claims 11 to 19 is implemented.

44. A computer program product, comprising a computer program, wherein when the computer program is executed, the method according to any one of claims 1 to 10 or the method according to any one of claims 11 to 19 is implemented.

45. A communication system, comprising the apparatus according to any one of claims 20 to 30 and the apparatus according to any one of claims 31 to 39.

FIG. 1

FIG. 2

EP 4 589 870 A1

FIG. 3

28

```
┌──────────────┐                              ┌──────────────┐
│ Base station │                              │ Terminal UE  │
└──────────────┘                              └──────────────┘
        │                                            │
        │                          ┌─────────────────────────────────────┐
        │                          │ 401: Send a first reference signal   │
        │                          └─────────────────────────────────────┘
        │                                            │
        │  ◄──────── First reference signal ─────────│
        │                                            │
┌─────────────────────────────────────┐             │
│ 402: Receive the first reference     │             │
│ signal                               │             │
└─────────────────────────────────────┘             │
        │                                            │
┌─────────────────────────────────────┐             │
│ 403: Obtain a first parameter, a     │             │
│ second parameter, and an MCS         │             │
│ mapping factor of each of a          │             │
│ plurality of codewords based on the  │             │
│ first reference signal               │             │
└─────────────────────────────────────┘             │
        │                                            │
┌─────────────────────────────────────┐             │
│ 404: Send first information, where   │             │
│ the first information indicates the  │             │
│ first parameter, the second          │             │
│ parameter, and the MCS mapping       │             │
│ factor of each of the plurality of   │             │
│ codewords                            │             │
└─────────────────────────────────────┘             │
        │                                            │
        │──────────── First information ────────────►│
        │                                            │
        │                          ┌─────────────────────────────────────┐
        │                          │ 405: Receive the first information  │
        │                          └─────────────────────────────────────┘
        │                                            │
```

FIG. 4

```
┌─────────────────┐                              ┌─────────────────┐
│  Base station   │                              │   Terminal UE   │
└─────────────────┘                              └─────────────────┘
         │                                                 │
         │                              ┌──────────────────┴──────────────────┐
         │                              │ 501: Send a first reference signal   │
         │                              └──────────────────┬──────────────────┘
         │                                                 │
         │◄──────────── First reference signal ────────────│
         │                                                 │
┌────────┴────────────────────────────────────┐           │
│     502: Receive the first reference signal  │           │
└────────┬────────────────────────────────────┘           │
         │                                                 │
┌────────┴────────────────────────────────────┐           │
│ 503: Obtain a first parameter, a second      │           │
│ parameter, and a first granularity of        │           │
│ channel quality of a plurality of            │           │
│ subchannels in time domain and/or frequency  │           │
│ domain based on the first reference signal   │           │
└────────┬────────────────────────────────────┘           │
         │                                                 │
┌────────┴────────────────────────────────────┐           │
│ 504: Send first information, where the first │           │
│ information indicates the first parameter,    │           │
│ the second parameter, and a second           │           │
│ granularity of the channel quality of the    │           │
│ plurality of subchannels in time domain and/ │           │
│ or frequency domain                          │           │
└────────┬────────────────────────────────────┘           │
         │                                                 │
         │──────────── First information ─────────────────►│
         │                                                 │
         │                              ┌──────────────────┴──────────────────┐
         │                              │ 505: Receive the first information   │
         │                              └──────────────────┬──────────────────┘
         │                                                 │
```

FIG. 5

```
┌──────────────────────────────────────────┐
│                                          │
│          Communication apparatus         │
│                                          │
│        ┌──────────────────┐              │
│        │  Communication   │   ╱ 601      │
│        │     module       │              │
│        └──────────────────┘              │
│                                          │
└──────────────────────────────────────────┘
```

FIG. 6

Communication apparatus

Communication
module

701

Processing module

702

FIG. 7

Communication apparatus 800

Memory 801

Processor 802

Bus 804

Communication
interface 803

FIG. 8

## INTERNATIONAL SEARCH REPORT

| International application No. |
|---|
| **PCT/CN2022/121756** |

**A. CLASSIFICATION OF SUBJECT MATTER**

H04L 1/00(2006.01)i; H04W 72/12(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 华为, 子信道, 信道增益, 多输入多输出, 调制和编码方式, 粒度, 资源块, 信道质量, 码字, 关联, 相关, channel, gain, MIMO, MCS, RB, quality, relation, correlation

**C. DOCUMENTS CONSIDERED TO BE RELEVANT**

| Category* | Citation of document, with indication, where appropriate, of the relevant passages | Relevant to claim No. |
|---|---|---|
| A | CN 102088342 A (CHONGQING WIRELESS OASIS COMMUNICATION TECHNOLOGY CO., LTD.) 08 June 2011 (2011-06-08)<br>description, paragraphs [0043]-[0073], and figure 2a | 1-45 |
| A | CN 111865482 A (HUAWEI TECHNOLOGIES CO., LTD.) 30 October 2020 (2020-10-30)<br>entire document | 1-45 |
| A | CN 115004762 A (HUAWEI TECHNOLOGIES CO., LTD.) 02 September 2022 (2022-09-02)<br>entire document | 1-45 |
| A | US 2012224546 A1 (CHANG SUNG CHEOL et al.) 06 September 2012 (2012-09-06)<br>entire document | 1-45 |
| A | ERICSSION. "DM-RS Enhancements for MU-MIMO in 2D Antenna Arrays"<br>*3GPP TSG-RAN WG1#81 R1-153172*, 16 May 2015 (2015-05-16),<br>entire document | 1-45 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/121756**

| Patent document cited in search report | | | Publication date (day/month/year) | Patent family member(s) | | | Publication date (day/month/year) |
|---|---|---|---|---|---|---|---|
| CN | 102088342 | A | 08 June 2011 | CN | 102088342 | B | 14 August 2013 |
| CN | 111865482 | A | 30 October 2020 | WO | 2020221261 | A1 | 05 November 2020 |
| CN | 115004762 | A | 02 September 2022 | None | | | |
| US | 2012224546 | A1 | 06 September 2012 | KR | 20120100833 | A | 12 September 2012 |

Form PCT/ISA/210 (patent family annex) (January 2015)